# EUROPÄISCHE PATENTSCHRIFT

(11) **EP 2 988 984 B1**
(45) Veröffentlichungstag und Bekanntmachung des Hinweises auf die Patenterteilung: **02.08.2017**
(21) Anmeldenummer: 14714597.3
(22) Anmeldetag: 29.03.2014
(51) Int. Cl.: B62D 25/00, B62D 29/00, B62D 25/20

(54) **FASERVERSTÄRKTE VERSTEIFUNGSSTREBE UND KRAFTFAHRZEUGKAROSSERIE**
FIBRE-REINFORCED STIFFENING STRUT AND MOTOR VEHICLE BODY
ENTRETOISE RAIDISSEUSE RENFORCÉE PAR DES FIBRES ET CARROSSERIE DE VÉHICULE AUTOMOBILE

(30) Priorität: 25.04.2013 DE 102013007206; 11.09.2013 DE 102013015184
(43) Veröffentlichungstag der Anmeldung: 02.03.2016
(73) Patentinhaber: Daimler AG, 70327 Stuttgart (DE)
(72) Erfinder: SALKIC, Asmir, 89077 Ulm (DE)
(74) Vertreter: JENSEN & SON
(86) Internationale Anmeldenummer: PCT/EP2014/000853
(87) Internationale Veröffentlichungsnummer: WO 2014/173489

(56) Entgegenhaltungen:
- DE-A1- 10 154 210
- DE-A1-102010 053 850

## Beschreibung

Die Erfindung betrifft eine faserverstärkte Versteifungsstrebe und eine Kraftfahrzeugkarosserie mit einer solchen Versteifungsstrebe.

Versteifungsstreben werden sowohl beim Bau von selbsttragenden Karosserien als auch bei klassischen Rahmenkarosserien eingesetzt. Insbesondere bei Cabrios, deren Karosserie-Steifigkeit infolge des fehlenden Dachs vermindert ist, werden Versteifungsstreben oft diagonal am Unterboden verbaut um das Verwinden während des Fahrbetriebs zu reduzieren. Es ist auch möglich, Streben dort einzusetzen, wo eine vermehrte Vibrationsneigung zu erwarten ist. Dadurch wird gezielt zusätzliche Steifigkeit erhalten und die Eigenfrequenz des jeweiligen Karosseriebereichs erhöht, sodass die Vibrationen in einem Frequenzband stattfinden, das nicht als störend empfunden wird. Dies betrifft insbesondere Bereiche der Karosserie, in denen Kräfte und/oder Momente eingeleitet werden, also etwa im Bereich der Lagerung der Motor-/Getriebeeinheit sowie im Bereich der Radantriebe und/oder Fahrwerksaufhängung. Versteifungsstreben, die in erster Linie zur Anpassung des Vibrationsverhaltens eingesetzt werden, werden auch Noise-Vibration-Harshness-Streben (NVH) genannt.

Es ist sowohl bekannt, Versteifungsstreben aus Stahl bzw. anderen metallischen Werkstoffen, als auch aus faserverstärkten Kunststoffen (FVK) herzustellen. Bei konventionellen Versteifungsstreben aus Metall wird der Toleranzausgleich durch ein Langloch zur Anbindung ermöglicht. Die dazu verwendeten Schrauben werden mit hohem Anzugsmoment an der Strebe verschraubt, um die Zug- und Druckkräfte von dem Rohbau auf die Strebe zu übertragen. Die hohen Schraubenanzugsmomente sind für die dauerhafte Verbindung der Strebe am Rohbau erforderlich. Der Einsatz von faserverstärkten Kunststoffen in Versteifungsstreben ist bisher jedoch mit Nachteilen verbunden. So tritt bei einer direkten Verschraubung der Strebe aus FVK mit der Karosserie unvermeidlich aufgrund von Kriechen des Strebenmaterials ein Setzen der Schraubverbindung auf, das dazu führt, dass die Vorspannkraft der Schraubverbindung nachlässt und evtl. regelmäßiges Nachziehen nötig ist. Ferner besteht ohne Gegenmaßnahmen die Gefahr, dass sich aufgrund der Leitfähigkeit der Verstärkungsfasern, insbesondere Kohlenstoffasern, in Kombination mit eindringender Feuchtigkeit ein Lokalelement bildet, was zu Korrosion führen kann.
Um dem Setzen der Schraubverbindung infolge des Kriechens des Strebenmaterials durch die angezogenen Schrauben entgegen zu wirken, werden FVK-Streben über an den Strebenenden geklebte sogenannte Metallschuhe am Rohbau befestigt. Dabei wird die Schraube nicht durch den Kunststoff sondern durch den Metallschuh geschraubt und die Kräfte werden über den Klebstoff übertragen, der nicht temperaturbeständig ist und daher zu einem Steifigkeitsabfall führt.

Die DE 10 2010 053 850 A1 betrifft eine Kraftfahrzeugkarosserie mit faserverstärkten Versteifungsstreben. Die Versteifungsstreben dort weisen beidenends einen Anbindungsabschnitt mit einer Durchtrittsöffnung für eine Schraube an einer Fügestelle auf, über die sie mit der Karosserie verbunden sind. An der Fügestelle weist die Versteifungsstrebe einen verjüngten Querschnitt zur Aufnahme des Schraubenkopfs auf. Ferner ist dort die Ausstattung der Versteifungsstrebe an dem Anbindungsabschnitt bzw. an der Fügestelle mit einer Verstärkungsstruktur bekannt, bei der es sich um einen innen liegenden Metallkern handeln kann.

Aus der DE 10154210 A1 ist eine aus einem Kunststoff/Metall-Verbundwerkstoff hergestellte Kraftverbindungsstrebe für ein Fahrwerk eines Kraftfahrzeuges bekannt. Die Kraftverbindungsstrebe weist einen länglichen Grundkörper und eine, diesen Grundkörper durchdringende Hülse auf. Die Hülse weist zumindest auf einer Seite einen Flansch au. Sie ist durch Umspritzen zumindest an einer ihrer Enden mit Kunststoff mit dem Grundkörper verbunden.

Ausgehend von diesem Stand der Technik ist es Aufgabe der vorliegenden Erfindung, eine verbesserte faserverstärkte Versteifungsstrebe bereitzustellen, die die Nachteile bekannter Versteifungsstreben beseitigt und insbesondere eine größere Gesamtsteifigkeit bereitstellt, korrosionsunempfindlich ist und eine wartungsfreie Anbindung an eine Karosserie erlaubt.

Diese Aufgabe wird durch eine faserverstärkte Versteifungsstrebe mit den Merkmalen des Anspruchs 1 gelöst.

Darüber hinaus ergibt sich die Aufgabe, eine Kraftfahrzeugkarosserie mit zumindest einer Versteifungsstrebe zu schaffen, die sich durch eine verbesserte Steifigkeit und Crashsicherheit auszeichnet.

Diese Aufgabe wird durch eine Kraftfahrzeugkarosserie mit den Merkmalen des Anspruchs 7 gelöst.

Eine erfindungsgemäße faserverstärkte Versteifungsstrebe besteht aus einem langgestreckten Strebenprofil aus einem faserverstärkten Kunststoff, insbesondere aus kohlenstofffaserverstärktem Kunststoff (CFK), mit einem oder mehreren innen liegenden Krafteinleitungselementen aus Metall, die sich zumindest teilweise entlang der Strebenlänge erstrecken. Bevorzugt ist das Krafteinleitungselement flächig oder bandförmig ausgebildet. Die Versteifungsstrebe weist zumindest einen Anbindungsabschnitt auf, in dem eine Durchtrittsöffnung oder mehrere Durchtrittsöffnungen senkrecht zu der Längsachse des Strebenprofils vorliegen. Die Durchtrittsöffnung dient dazu, die erfindungsgemäße Versteifungsstrebe mit einer Karosserie zu verbinden, beispielsweise über Schrauben. Innerhalb der Durchtrittsöffnungen sind metallische Buchsen angeordnet, die in form- oder kraftschlüssiger Verbindung mit den Krafteinleitungselementen stehen. Die Krafteinleitungselemente wirken dabei als Kraftübertragung aus dem FVK in die Buchsen. Die Krafteinleitungselemente sind zumindest im Bereich der Buchsen angeordnet, können aber auch die gesamte Versteifungsstrebe durchziehen, beziehungsweise sich entlang der gesamten Strebenlänge erstrecken.

Die erfindungsgemäße Versteifungsstrebe kann natürlich auch mehrere Anbindungsabschnitte, an den Enden und/oder dazwischen jeweils mit Durchtrittsöffnungen aufweisen; es ist aber auch möglich, dass die Versteifungsstrebe an einem der Enden auf eine andere Weise befestigt wird, beispielsweise durch Klemmen oder Kleben.

Das Querschnittsprofil der Versteifungsstrebe ist bevorzugt nicht nur zwischen den Anbindungsabschnitten sondern über die gesamte Länge des Strebenprofils gleichbleibend, was die Herstellung vereinfacht. Darüber hinaus weist das Strebenprofil bevorzugt einen U-förmigen oder H-förmigen Querschnitt auf, wodurch es möglich ist, bei einem geringen Gewicht ein vergleichsweise hohes axiales Flächenträgheitsmoment bereitzustellen, was zu einer erhöhten Sicherheit gegen Knicken führt. Insbesondere im Crash-Fall führt dies dazu, dass die Karosserieintegrität deutlich länger erhalten bleibt. Vorteilhaft zeigt die Versteifungsstrebe im Crash-Fall zudem duktiles Verhalten durch das eingebettete Krafteinleitungselement aus Metall.

Ferner lässt sich der Schraubenkopf einer zur Anbindung verwendeten in der Buchse verlaufenden Schraube gut in dem U-Profil oder H-Profil versenken oder "verstecken"; er überragt es nicht. Anders als im Stand der Technik ist es somit nicht notwenig, eine abweichende Querschnittsform an der Fügestelle vorzusehen.

Durch das Krafteinleitungselement kann eine Anbindungsschraube direkt durch die FVK-Versteifungsstrebe geschraubt werden, da das in die Strebe eingebettete Krafteinleitungselement eine dauerhafte und betriebsfeste Krafteinleitung und Kraftübertragung ohne Steifigkeitssprünge ermöglicht. Die Kraft wird dabei von der Schraube in die Buchse und das Krafteinleitungselement übertragen und in das FVK geleitet. Dies ist besonders gut bei flächiger oder bandförmiger Bauweise des Krafteinleitungselements möglich. So werden die Zug- und Druckkräfte vom Rohbau eines Kraftfahrzeugs auf die Versteifungstrebe durch das Krafteinleitungselement ermüdungsarm, d. h. mit reduzierter Werkstoffermüdung bei Krafteinleitung in eine neutrale Bauteilebene übertragen.

Bei dem Krafteinleitungselement, das sich zumindest über den Bereich der Buchsen oder durch die gesamte Strebenlänge erstreckt, kann es sich um ein Metallband handeln. Hierbei kann bevorzugt ein Metallband aus Federstahl mit hoher Festigkeit und Elastizität eingesetzt werden.

Es ist eine Buchse aus einem Metallwerkstoff in der Durchtrittsöffnungen angeordnet sind, welche die Kraftübertragung von einer Anbindungsschraube auf das Krafteinleitungselement unterstützt, so dass die Krafteinleitung in die Strebe nicht unmittelbar über den Schraubenkopf erfolgt.
Die Krafteinleitung in die FVK-Strebe erfolgt vielmehr über die Buchse und über das Krafteinleitungselement. Hierdurch wird vermieden, dass es zu einem Setzen des FVK mit Verlust der Vorspannung kommt.

Diese Buchse kann einteilig sein, und die Durchtrittsöffnung somit vollständig auskleiden. In einer Variante kann aber auch eine zweiteilige Buchse aus einem oberen und einem unteren Buchsenabschnitt vorgesehen sein, deren Innendurchmesser die Durchtrittsöffnung begrenzt. Hierbei erstreckt sich das Krafteinleitungselement zwischen den oberen und den unteren Buchsenabschnitt, so dass die Kraftübertragung von Buchse auf Krafteinleitungselement weiter verbessert wird. Vorteilhaft wird die Kraft somit nicht durch eine versagenskritische Klebeverbindung geleitet, die zudem noch großen Verformungen unterliegt und nur geringe Steifigkeit aufweist.

So kann durch Einsatz der Buchse die Druckbelastung aus der Schraubenvorspannung durch die Buchse umgeleitet werden, sodass das faserverstärkte Strebenprofil diese Klemmkraft nicht aufnehmen muss. Dem Setzen der Schraubverbindung aufgrund von Werkstoffrelaxation im Strebenprofil kann so wirksam vorgebeugt werden, wodurch eine einmal mit einem vorbestimmten Anzugsmoment befestigte Schraube nicht mehr regelmäßig nachgezogen werden muss.

Ferner verhindert die Buchse einen direkten Kontakt der Schraube mit dem FVK-Material der Strebe, so dass, für den Fall, dass das FVK-Material der Strebe Carbonfasern enthält, Kontaktkorrosion der Schraube vermieden werden kann.

Für diesen Fall, dass die Verstärkungsfasern des faserverstärkten Kunststoffs zumindest einen Anteil an Carbonfasern aufweisen, ist vorgesehen, dass die Versteifungsstrebe zumindest eine Isolationsschicht um das Krafteinleitungselement aus Metall aufweist, um auch dort Kontaktkorrosion zu vermeiden. Als Isolationsschicht kommt hierbei beispielsweise eine Schicht aus Faserverbundkunststoff in Frage, der keine Carbonfasern oder andere elektrisch leitende Fasern aufweist. Bevorzugt können daher Glasfasern eingesetzt werden, um die Isolationsschicht um das Krafteinleitungselement zu bilden. Ebenso ist es möglich als Isolationsschicht den Matrixkunststoff des CFK, bzw. FVK oder einen Kleber zu verwenden.

Ist die Buchse ebenfalls aus einem Metallwerkstoff kann eine weitere Isolationsschicht zwischen der Buchse und dem Strebenprofilaus Carbonfaserhaltigem Kunststoff vorgesehen sein. Desgleichen kann zwischen einer metallischen Buchse und dem Krafteinleitungselement, insbesondere, wenn diese aus unterschiedlichen Metallwerkstoffen gefertigt sind, eine Isolationsschicht vorgesehen sein.

Eine erfindungsgemäße Versteifungsstrebe kann also dauerfest und ohne ständiges Nachkontrollieren der Schraubverbindung mit einer Karosserie verbunden werden.

Eine erfindungsgemäße Kraftfahrzeugkarosserie weist eine oder mehrere erfindungsgemäße Versteifungsstreben auf. Die Strebe kann nach individuellem Anforderungsprofil an verschiedenen Einsatzorten verbaut werden. Etwa diagonal am Unterboden zur Verminderung der Karosserieverwindung um die Fahrrichtungsachse, zwischen Fahrwerkskomponenten, an Krafteinleitungspunkte wie der Motor-Getriebeeinheit, an Radantrieben, am Hinterachsdifferenzial. Insbesondere ist die erfindungsgemäße Strebe aufgrund ihrer hohen Gesamtsteifigkeit geeignet, um das NVH-Verhalten der Karosserie gezielt zu beeinflussen. Die Aufzählung ist jedoch nicht als abschließend aufzufassen, vielmehr ist es möglich, die erfindungsgemäße Versteifungsstrebe an weiteren, dem Fachmann geeignet erscheinenden Orten im Fahrzeug oder auch stationär einzusetzen.

Diese und weitere Vorteile werden durch die nachfolgende Beschreibung unter Bezug auf die begleitenden Figuren dargelegt. Der Bezug auf die Figuren in der Beschreibung dient dem erleichterten Verständnis des Gegenstands. Die Figuren sind lediglich eine schematische Darstellung einer Ausführungsform der Erfindung.

Dabei zeigen:
- Fig. 1: eine perspektivische Ansicht der Versteifungsstrebe,
- Fig. 2: eine perspektivische Detailansicht eines endseitigen Anbindungsabschnitts einer erfindungsgemäßen Ausführungsform der Versteifungsstrebe,
- Fig. 3: eine perspektivische Detailansicht eines endseitigen Anbindungsabschnitts einer weiteren erfindungsgemäßen Ausführungsform der Versteifungsstrebe,
- Fig. 4: eine Längsschnittansicht durch den Anbindungsabschnitt aus Fig. 2,
- Fig. 5: eine Längsschnittansicht durch den Anbindungsabschnitt aus Fig. 3,
- Fig. 6: eine Querschnittansicht durch den Anbindungsabschnitt aus Fig. 2,
- Fig. 7: eine Querschnittansicht durch den Anbindungsabschnitt aus Fig. 3.

Die erfindungsgemäße Leichtbau-Hybridversteifungsstrebe besteht aus Faserverbundwerkstoff und Metall, und stellt eine neutrale Strebenebene bereit, in die die Krafteinleitung erfolgt.

Da Zugstreben aus Faserverbundkunststoffen bei der dauerhaften Flächenpressung, wie sie beispielsweise durch angezogene Schraubenköpfe entstehen, relaxieren, und ferner die Krafteinleitung bzw. -übertragung bei erhöhten Temperaturen infolge der Vermittlung über Klebstoff kritisch ist, treten bislang bei solchen Versteifungsstreben aus Faserverbundkunststoffen Ermüdungserscheinungen auf.

Die erfindungsgemäße Leichtbau-Hybridversteifungsstrebe ermöglicht aufgrund der Krafteinleitung in eine "neutralere" Bauteilebene eine dauerhafte Bauteil-Anbindung zwischen der Versteifungsstrebe und dem Fahrzeug-Rohbau und damit auch der Gesamtrohbausteifigkeit, auch bei erhöhten Temperaturen.

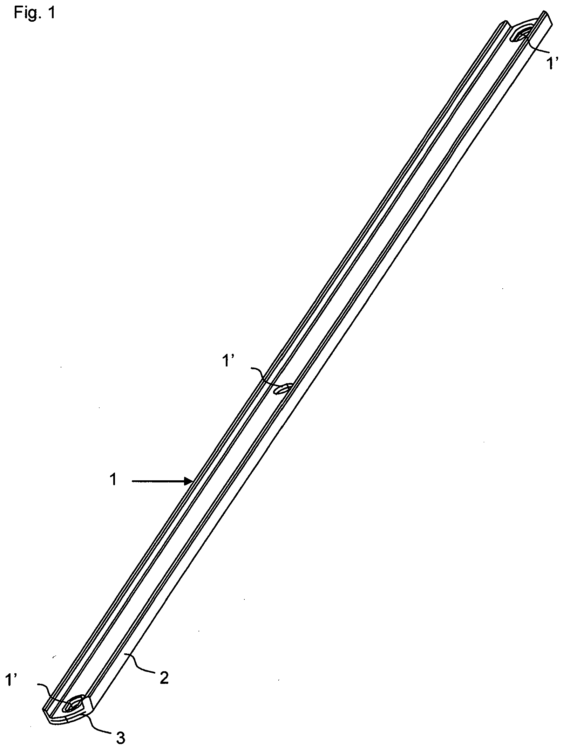

Fig. 1 zeigt eine erfindungsgemäße Leichtbau-Hybridversteifungsstrebe 1 aus Faserverbundkunststoff und Metall. Als Verstärkungsfasern können vorzugsweise aufgrund der vorteilhaften mechanischen Eigenschaften Carbonfasern eingesetzt werden. Die Versteifungsstrebe 1 weist ein langgestrecktes U-förmiges Strebenprofil 2 aus Faserverbundkunststoff mit einem darin eingebetteten Krafteinleitungselement 3 aus Metall auf. Das Krafteinleitungselement 3 ermöglicht die Krafteinleitung in eine neutrale Ebene; die Anordnung eines Metallschuhs ist nicht erforderlich. An den Enden des Strebenprofils befinden sich die Anbindungsabschnitte, in denen jeweils eine Durchgangsöffnung 1' mit einer Buchse vorliegt, die sich senkrecht zur Längsachse des Strebenprofils 2 und durch das eingebettete Krafteinleitungselement 3 erstreckt. Zwischen den beiden endseitigen Anbindungsabschnitten befindet sich ein weiterer Anbindungsabschnitt, in dem auch eine Durchgangsöffnung 1' vorliegt.

Die erfindungsgemäße Versteifungsstrebe 1 wird als leichtgewichtiges Versteifungsbauteil in eine Kraftfahrzeugkarosserie montiert, beispielsweise als Versteifung am Unterboden, im Motorraum, zwischen Fahrwerksanbindungen und/oder zur Fixierung von Antriebskomponenten, was jedoch nicht figurativ gezeigt ist. Dazu wird durch die Durchtrittsöffnungen 1' der Strebe 1 jeweils eine Befestigungsvorrichtung (z. B. eine Schraube) gesteckt und mit der Karosserie verbunden. Durch die Kraftübertragung auf das Krafteinleitungselement 3 treten keine Steifigkeitssprünge wie bei bekannten faserverstärkten Versteifungsstreben auf, bei denen Anbindungsschuhe endseitig aufgeklebt sind und die Schraube nicht durch das Strebenprofil selbst gesteckt ist. Die effektive Gesamtsteifigkeit der Versteifungsstrebe 1 ergibt sich bei der vorliegenden Versteifungsstrebe maßgeblich durch die Steifigkeit des Strebenprofils 1; sie wird nicht durch eine vergleichsweise nachgiebige Klebeverbindung gemindert.

Der Schraubenkopf einer zur Montage verwendeten Schraube ragt in montiertem Zustand nicht über die Schenkel des U-förmigen Strebenprofils 2 hinaus, was beispielsweise bei einer Montage der Versteifungsstrebe 1 am Unterboden mit Vorteilen hinsichtlich der Bodenfreiheit verbunden ist. Ferner bietet der U-förmige Querschnitt des Strebenprofils 2 den Vorteil, dass bei relativ geringem Gewicht ein hohes Widerstandsmoment sowie eine vergleichsweise hohe Sicherheit gegen Ausknicken bereitgestellt werden kann. Dies ist insbesondere in einer Aufprallsituation vorteilhaft, da die erfindungsgemäße Strebe 1 dadurch länger intakt bleibt und größere Energiemengen weiterleiten kann. Die Sicherheit gegen Ausknicken bei Druckbelastung wird zusätzlich auch noch durch den dritten, mittig auf dem Strebenprofil 2 angeordneten Anbindungsabschnitt erhöht, der die Versteifungsstrebe 1 zusätzlich quer der Längsachse führt.

Die U-förmige Querschnittsform des Strebenprofils kann durch automatisierte Textiltechnologien erhalten werden. Durch ein Wickel- oder Pultrusionsverfahren wie z. B. Flechtpultrusion kann ein Strebenprofil direkt um das Krafteinleitungselement kontinuierlich erzeugt werden. Es sind aber auch andere Herstellungsverfahren, z. B. RTM-Verfahren denkbar, bei denen das Krafteinleitungselement mit Faserverbundkunststoff umspritzt wird oder zusammen mit Faserhalbzeugen in ein Spritzgusswerkzeug eingelegt wird, in das ein Matrixkunststoffmaterial injiziert wird

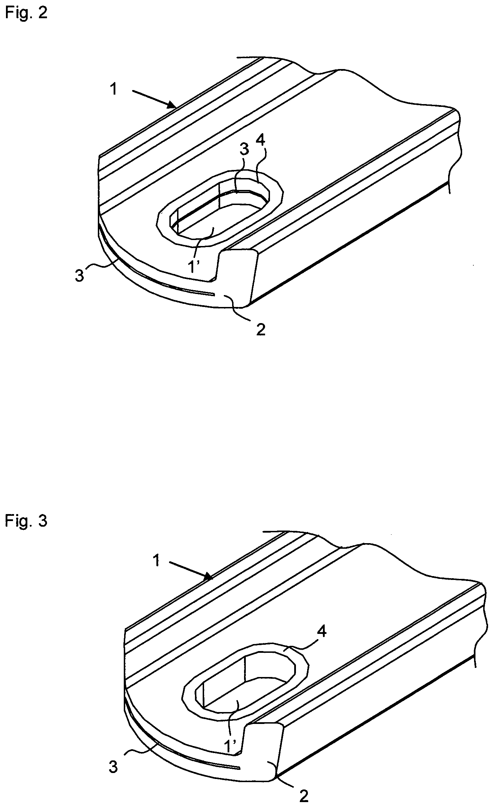

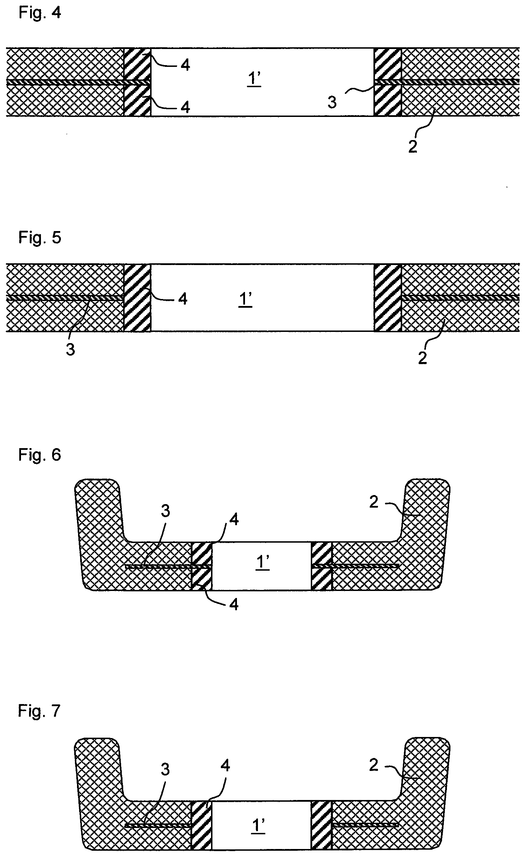

In Fig. 2 und Fig. 3 ist jeweils ein Anbindungsabschnitt einer erfindungsgemäßen Versteifungsstrebe in zwei unterschiedlichen Ausführungsformen dargestellt. In der Durchtrittsöffnung 1' der Versteifungsstrebe 1 ist jeweils eine Buchse 4 aus einem Metallwerkstoff angeordnet, in Fig. 2 handelt es sich um eine zweiteilige Buchse 4 und in Fig. 3 um eine einteilige Buchse 4. In der Ausführungsform mit der zweiteiligen Buchse 4 aus Fig. 2 erstreckt sich das Krafteinleitungselement 3, bei dem es sich um ein Metallband, beispielsweise aus Federstahl, handeln kann, zwischen den beiden Buchsenteilen 4 bis zur Durchtrittsöffnung 1', wie auch aus der Längsschnittansicht in Fig. 4 und der Querschnittansicht in Fig. 6 ersichtlich wird.

Fig. 3 zeigt eine Ausführungsform der erfindungsgemäßen Versteifungsstrebe 1 mit einer einteiligen Buchse 4 in der Durchtrittsöffnung 1', zu der die Längsschnittansicht aus Fig. 5 und die Querschnittansicht Fig. 7 gehören und bei der sich das Krafteinleitungselement 3 bis zur Buchse 4 erstreckt.

Bei einer erfindungsgemäß aufgebauten Versteifungsstrebe 1 werden die Zug- und Druckkräfte über Formschluss zwischen Schraube und dem Krafteinleitungselement 3 von Rohbau auf die Strebe ermüdungsarm übertragen, da die Anbindungsschraube direkt durch die Versteifungsstrebe 1 geschraubt wird und durch das in das FVK-Profil 2 eingebettete Krafteinleitungselement 3 eine dauerhafte und damit betriebsfeste Krafteinleitung und Kraftübertragung ohne Steifigkeitssprünge realisiert wird. Durch die Krafteinleitung in eine "neutrale" Bauteilebene, die durch das eingebettete Krafteinleitungselement 3 bereitgestellt wird, wird die Werkstoffermüdung reduziert.

Die erfindungsgemäße Strebe 1 gestattet so das direkte Verschrauben ohne Metall- bzw. Anbindungsschuh. Beim Crash zeigt die Strebe 1 durch das Krafteinleitungselement 3, das durch einen die Strebe 1 längs durchziehenden Metallkern gebildet wird, duktiles Verhalten und bricht nicht spröde.

Im Falle der bevorzugt zur Herstellung des Faserverbundkunststoffprofils verwendeten Carbonfasern sorgt die gezielte Platzierung von Glasfasern (nicht in den Figuren dargestellt) um das Krafteinleitungselement 3 für die Vermeidung von Kontaktkorrosion.

Die Anordnung der Buchse 4, bzw. der beiden Buchsenabschnitte 4 in der Durchtrittsöffnung 1' durch Einpressen oder Stecken gegebenenfalls auch unter Verwendung von Klebstoff erfolgen. Ein Klebstoff kann hier auch zur Vermeidung von Kontaktkorrosion zwischen einem metallischen Buchsenwerkstoff und einem Carbonfaserhaltigen Verbundkunststoff eingesetzt werden. Zur Vermeidung von Kontaktkorrosion zwischen einer zweiteiligen Buchse aus Metall und dem Krafteinleitungselement, das zwischen den Buchsenteilen aufgenommen ist, kann beispielsweise eine entsprechende Beschichtung von Krafteinleitungselement und/oder Buchse vorgesehen sein.

Wird Klebstoff auch als Isolationsschicht eingesetzt, so kann bei der Fertigung der Versteifungsstrebe 1 vorgesehen sein, dass ein Klebstoffüberschuss verwendet wird, so dass sich an den Kanten der Buchse ein Klebstoffkragen ausbilden kann, der das Eindringen von Feuchtigkeit und/oder Schmutz zwischen die Buchse 4 und das Strebenprofil 2 verhindert. Liegt zwischen den Klebepartnern Buchse und Profil ein geringer Spalt vor, kann ein Klebstoff Feststoffpartikel wie etwa Glaskugeln beinhalten, wodurch sichergestellt wird, dass der Spalt an jeder Stelle die gleiche Spaltweite hat und eine möglichst steife Klebeverbindung erhalten wird.

Eine zur Befestigung durch die Durchtrittsöffnung 1' geführte Schraube liegt an der Buchse 4 an, so dass auch unter Einwirkung einer Schraubenvorspannkraft keine Druckkraft auf das Strebenprofil ausgeübt wird und die Schraubenvorspannkraft komplett durch die Buchse und auf das Krafteinleitungselement 3 geleitet wird. Hierdurch kann Setzen des Werkstoffs des faserverstärkten Strebenprofils wirksam vorgebeugt werden.

Durch die Verwendung von Buchsen mit unterschiedlichem Innendurchmesser kann ferner die Variantenanzahl der erfindungsgemäßen Versteifungsstrebe 1 reduziert werden; um etwa an verschiedenen Kraftfahrzeugkarosserien mit unterschiedlichem Schraubendurchmesser befestigt werden zu können.

Mit der erfindungsgemäßen Versteifungsstrebe wird nicht nur das NVH-Verhalten des Fahrzeugs verbessert, sie weist auch verbesserte Steifigkeits-, Ermüdungs- und Crasheigenschaften auf. Weitere Krafteinleitungselemente wie Unterlegscheiben oder Hülsen sind nicht notwendig. Durch die Ausführung der Strebe mit dem Krafteinleitungselement und der Buchse ist ferner ein niedriges Schrauben-Anzugsmoment möglich. Die erfindungsgemäße Versteifungsstrebe weist ferner ein höheres Leichtbaupotential als konventionelle Zugstreben auf und kann zudem wirtschaftlich hergestellt werden.

## Patentansprüche

1. Faserverstärkte Versteifungsstrebe (1), die ein langgestrecktes Strebenprofil (2) aus einem faserverstärkten Kunststoff mit einem innen liegenden Krafteinleitungselement (3) aus Metall zumindest teilweise entlang der Strebenlänge und zumindest einen Anbindungsabschnitt aufweist, in dem zumindest eine Durchtrittsöffnung (1') senkrecht zu der Längsachse des Strebenprofils (2) vorliegt, wobei
in der Durchtrittsöffnung (1') eine Buchse (4) aus einem Metallwerkstoff angeordnet ist und das Krafteinleitungselement (3) in formschlüssiger oder kraftschlüssiger Verbindung mit der Buchse (4) steht,
**dadurch gekennzeichnet, dass**
die Buchse (4) eine zweiteilige Buchse (4) mit einem oberen und einem unteren Buchsenabschnitt ist, wobei sich das Krafteinleitungselement (3) zwischen den oberen und den unteren Buchsenabschnitten erstreckt.

2. Versteifungsstrebe (1) nach Anspruch 1,
**dadurch gekennzeichnet, dass**
das Querschnittsprofil der Versteifungsstrebe (1) über die gesamte Länge des Strebenprofils (2) gleichbleibend und H- oder U-förmig ist.

3. Versteifungsstrebe (1) nach zumindest einem der Ansprüche 1 oder 2,
**dadurch gekennzeichnet, dass**
das Krafteinleitungselement (3) ein Metallband, bevorzugt ein Metallband aus Federstahl, ist.

4. Versteifungsstrebe (1) nach zumindest einem der Ansprüche 1 bis 3,
**dadurch gekennzeichnet, dass**
die Verstärkungsfasern des faserverstärkten Kunststoffs zumindest einen Anteil an Carbonfasern aufweisen, wobei die Versteifungsstrebe (1) zumindest eine Isolationsschicht um das Krafteinleitungselement (3) aus Metall aufweist.

5. Versteifungsstrebe (1) nach Anspruch 4,
**dadurch gekennzeichnet, dass**
die Isolationsschicht durch eine Schicht aus Faserverbundkunststoff gebildet wird, der keine Carbonfasern und bevorzugt Glasfasern aufweist.

6. Versteifungsstrebe (1) nach Anspruch 4 oder 5,
**dadurch gekennzeichnet, dass**
eine weitere Isolationsschicht zwischen der Buchse (4) und dem Strebenprofil (2) aus Carbonfaserhaltigem Kunststoff und/oder zwischen der Buchse (4) und dem Krafteinleitungselement (3) vorgesehen ist.

7. Kraftfahrzeug-Karosserie mit zumindest einer Versteifungsstrebe,
**dadurch gekennzeichnet, dass**
die Versteifungsstrebe eine faserverstärkte Versteifungsstrebe (1) nach zumindest einem der Ansprüche 1 bis 6 ist.

## Claims

1. Fibre-reinforced stiffening strut (1), which has an elongate strut profile (2) made of a fibre-reinforced plastic having an internal force introduction element (3) made of metal along at least a part of the length of the strut and at least one connection section, in which at least one passage opening (1') is provided perpendicular to the longitudinal axis of the strut profile (2),
wherein
in the passage opening (1') a bushing (4) made of a metal substance is arranged and the force introduction element (3) is connected to the bushing (4) by positive or non-positive engagement,
**characterised in that**
the bushing (4) is a two-part bushing (4) having an upper and a lower bushing portion, wherein the force introduction element (3) extends between the upper and the lower bushing portions.

2. Stiffening strut (1) according to claim 1,
**characterised in that**
the cross-sectional profile of the stiffening strut (1) is constant and H-shaped or U-shaped along the whole length of the strut profile (2).

3. Stiffening strut (1) according to at least one of claims 1 or 2,
**characterised in that**
the force introduction element (3) is a metal strip, preferably a metal strip of spring steel.

4. Stiffening strut (1) according to at least one of claims 1 to 3,
**characterised in that**
the reinforcing fibres of the fibre-reinforced plastic have at least a portion of carbon fibres, wherein the stiffening strut (1) has at least an insulating layer around the force introduction element (3) made of metal.

5. Stiffening strut (1) according to claim 4,
**characterised in that**
the insulating layer is formed by a layer of fibre composite plastic, which has no carbon fibres and preferably glass fibres.

6. Stiffening strut (1) according to claim 4 or 5,
**characterised in that**
a further insulating layer is provided between the bushing (4) and the strut profile (2) made of carbon-fibre-containing plastic and / or between the bushing (4) and the force introduction element (3).

7. Motor vehicle body having at least one stiffening strut,
**characterised in that**
the stiffening strut is a fibre-reinforced stiffening strut (1) according to at least one of claims 1 to 6.

## Revendications

1. Jambe de force (1) renforcée par des fibres qui présente un profilé (2) d'étayage allongé constitué d'une matière plastique renforcée par des fibres comprenant un élément (3) de transmission de force intérieur constitué de métal au moins partiellement sur la longueur d'étayage et au moins une partie de liaison, dans laquelle une ouverture (V) de passage est présente perpendiculairement à l'axe longitudinal du profilé (2) d'étayage, dans l'ouverture (1') de passage est disposée une douille (4) constituée d'un matériau métallique et l'élément (3) de transmission de force est en liaison par coopération de formes ou de force avec la douille (4), **caractérisée en ce que** la douille (4) est une douille (4) en deux parties comprenant une partie inférieure et une partie supérieure de douille, l'élément (3) de transmission de force s'étendant entre les parties inférieure et supérieure de douille.

2. Jambe de force (1) selon la revendication 1, **caractérisée en ce que** le profilé transversal de la jambe de force (1) est en forme de U ou de H de manière constante sur toute la longueur du profilé (2) d'étayage.

3. Jambe de force (1) selon l'une quelconque des revendications 1 ou 2, **caractérisée en ce que** l'élément (3) de transmission de force est une bande métallique, de préférence une bande métallique constituée d'acier à ressort.

4. Jambe de force (1) selon l'une quelconque des revendications 1 à 3, **caractérisée en ce que** les fibres de renfort de la matière plastique renforcée par des fibres présentent au moins une proportion de fibres de carbone, la jambe de force (1) présentant au moins une couche d'isolation autour de l'élément (3) de transmission de force constitué de métal.

5. Jambe de force (1) selon la revendication 4, **caractérisée en ce que** la couche d'isolation est conçue par une couche constituée de matière plastique composite renforcée par des fibres, qui présente aucune fibre de carbone de préférence aucune fibre de verre.

6. Jambe de force (1) selon la revendication 4 ou la revendication 5, **caractérisée en ce qu'**il est prévu une autre couche d'isolation entre la douille (4) et le profilé (2) d'étayage constitué de matière plastique contenant des fibres de carbone et/ou entre la douille (4) et l'élément (3) de transmission de force.

7. Carrosserie de véhicule automobile comprenant au moins une jambe de force, **caractérisée en ce que** la jambe de force est une jambe de force (1) renforcée par des fibres selon au moins l'une quelconque des revendications 1 à 6.
